Europäisches Patentamt

European Patent Office

Office européen des brevets

(11) Numéro de publication: **0 119 921**
**B1**

(12) ## FASCICULE DE BREVET EUROPÉEN

(45) Date de publication du fascicule du brevet:
14.01.87

(51) Int. Cl.⁴: **B 60 T 13/04,** F 16 K 31/02

(21) Numéro de dépôt: 84400519.9

(22) Date de dépôt: 14.03.84

(54) Electrovalve à trois voies.

(30) Priorité: 21.03.83 FR 8304581

(43) Date de publication de la demande:
26.09.84 Bulletin 84/39

(45) Mention de la délivrance du brevet:
14.01.87 Bulletin 87/3

(84) Etats contractants désignés:
DE GB IT SE

(56) Documents cité:
DE-B-1 179 068
FR-A-2 206 078
FR-A-2 259 303

(73) Titulaire: BENDIX France, 126, rue de Stalingrad,
F-93700 Drancy (FR)

(72) Inventeur: Tanguy, Christian, 34 Bis Avenue
Gaston Bourry, F-95740 Frepillon (FR)

(74) Mandataire: Le Moenner, Gabriel, SERVICE
BREVETS BENDIX 44, Rue François 1er, F-75008
Paris (FR)

## Description

La présente invention concerne les électrovalves à trois voies et trois positions, du type présentant une structure générale à axe de symétrie et comportant une armature magnétique mobile en translation suivant cet axe sous l'action de moyens électromagnétiques et d'un ressort de rappel, cette armature étant creuse et comportant intérieurement deux clapets situés sur ledit axe, mobiles l'un par rapport à l'autre et par rapport à l'armature, écartés l'un de l'autre par un ressort et munis de brides par l'intermédiaire desquelles ils peuvent être déplacés par l'amarture mobile vis-à-vis des sièges fixes qu'ils sont susceptibles d'obturer.

Une électrovalve de ce type est décrite dans le document FR-A- 2 259 303. Dans des électrovalves connues de ce genre, chaque clapet coopère par sa bride avec des épaulements en regard l'un de l'autre de l'armature et ne sont directement associés l'un à l'autre que par l'intermédiaire du ressort d'écartement. Les positions extrêmes de l'armature sont définies soit par des butées externes, soit par la bride du clapet en configuration fermée pour la position extrême correspondante. Il en résulte des risques de désalignement ou de mise en biais des clapets par rapport à leur siège respectif et donc d'obturation défectueuse avec fuites, voire d'endommagement du siège. Par ailleurs, un tel agencement nécessite de prévoir une entretoise tubulaire solidarisée à l'armature par des organes de verrouillage via des entretoises annulaires de débattement des brides de clapets, ce qui obère les coûts de montage et augmente les risques de défauts de montage.

La présente invention a pour objet de proposer un agencement perfectionné d'électrovanne du type susmentionné, de construction simple, robuste et présentant une fiabilité accrue en évitant les risques de désalignement et de mise en biais des clapets par rapport à leurs sièges respectifs.

Pour ce faire, selon un caractéristique de l'invention, chaque position extrême de l'armature, pour laquelle un premier des clapets est plaqué sur son siège et le second clapet est dégagé de son siège, est déterminée par butée de l'armature contre la bride du second clapet lui-même en butée contre le premier clapet via une entretoise disposée centralement entre les clapets et coopérant en appui sur l'extrémité interne d'un des clapets suivant un contact ponctuel en un point situé sensiblement sur l'axe de symétrie de l'électrovalve.

Dans un tel agencement, l'entretoise disposée centralement entre les clapets réalise ainsi, pour chaque position extrême, une liaison rigide et centrée entre les clapets déterminant avec précision la position extrême de l'armature et confirmant la fermeture du clapet correspondant en évitant les risques de désalignement et de mise en biais du clapet par rapport à son siège.

Avantageusement le contact ponctuel est réalisé entre une surface plane perpendiculaire à l'axe de symétrie et une surface bombée appartenant l'une au clapet et l'autre à l'entretoise. De préférence, cette surface bombée appartient à l'entretoise et la surface plane au clapet, cette dernière pouvant alors être constituée par la face terminale de la bride de ce clapet. La surface bombée est avantageusement formée par une bille sphérique. Dans ce cas, lorsque les organes d'obturation des clapets sont constitués par des billes, ces billes et la bille de contact ponctuel, alignées sur l'axe de symétrie, peuvent être identiques.

La disposition selon l'invention permet en outre de prévoir que les clapets soient retenus dans l'armature mobile par simple interposition de l'ensemble de leurs brides entre une paire de bagues de guidage des clapets, seule l'une de ces bagues étant fixée de manière démontable dans l'armature mobile. Cela conduit à un mode de montage particulièrement aisé des clapets dans l'armature mobile.

D'autres caractéristiques et avantages de l'invention seront mieux compris à la lecture de la description qui va suivre, en regard des dessins annexés, d'un exemple de réalisation non limitatif.

La figure 1 représente en coupe axiale une électrovalve selon l'invention.

Les figures 2 à 4 représentent schématiquement les trois positions de fonctionnement de l'électrovalve de la figure 1.

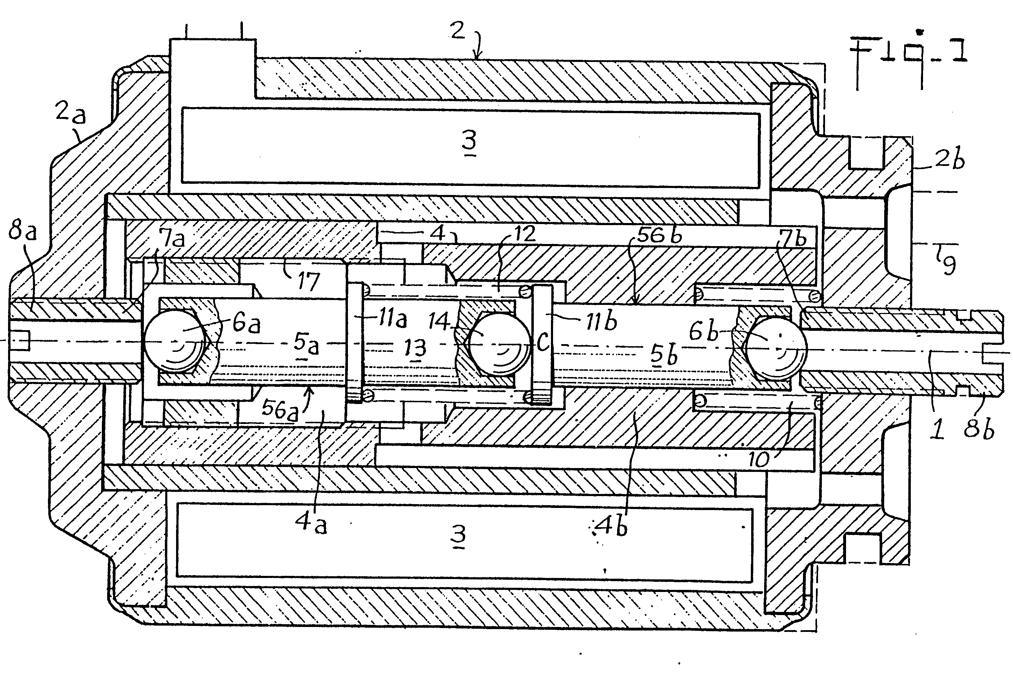

L'électrovalve à trois voies représentée à la figure 1, dont la structure générale présente une symétrie de révolution autour d'un axe 1, comporte, dans un boîtier 2, une bobine électromagnétique 3 capable de faire se déplacer en translation suivant l'axe 1 une armature mobile 4. Celle-ci est creuse et comporte intérieurement des bagues de guidage 4a, 4b dans lesquelles peuvent coulisser respectivement deux clapets 56a, 56b constitués par des pièces cylindriques 5a, 5b portant à leur extrémité extérieure des billes 6a, 6b dont chacune peut venir obturer un siège respectif 7a, 7b, ces sièges apparaissant aux extremités internes de tubulures 8a, 8b montrés coaxialement à l'axe 1 dans des flasques d'extrémités 2a, 2b du boîtier 2. Suivant celle des trois positions que prend l'armature mobile 4, chaque tubulure 8a, 8b peut être soit obturée, soit reliée à une troisième tubulure 9 (par l'intermédiaire de passages prévus à cet effet autour et a travers l'armature mobile 4).

L'armature mobile 4 est sollicitée vers la gauche (suivant la représentation de la figure 1) par un ressort de rappel 10, tandis que la bobine 3, excitée par un courant électrique, la sollicite vers la droite. Les pièces cylindriques 5a, 5b comportent, à leur extrémité la plus proche du centre de l'armature 4, une bride 11a, 11b dont chacune peut coopérer avec la bague de guidage 4a, 4b respective. Les pièces 5a, 5b et par suite leurs billes 6a, 6b sont écartées mutuellement par un ressort de compression 12 interposé entre les

brides 11a, 11b.

La pièce 5a se prolonge, au delà de sa bride 11a, par une entretoise 13 solidaire de ladite bride, qui porte son extrémité une bille 14 susceptible de venir en contact ponctuel avec le centre C de la bride 11b de l'autre pièce 5b, ce point étant situé sensiblement sur l'axe 1.

Le fonctionnement de l'électrovalve va maintenant être expliqué à l'aide des figures schématiques 2 à 4. Lorsque la bobine 3 (non représentée sur ces figures) n'est pas excitée, l'armature mobile est repoussée à gauche par le ressort 10 dans sa position de repos, définie par la venue en butée de la bague de guidage 4b sur la bride 11b du clapet 56b, de cette bride 11b sur la bille 14 appartenant à l'entretoise 13 et de la bille 6a appartenant au clapet 56a sur son siège 7a, tandis qu'en même temps le clapet 56b se trouve tiré vers la gauche par sa bride 11b, de sorte que la bille 6b de ce clapet est écartée de son siège 7b. La tubulure 8b est alors reliée à la tubulure 9 (non représentée), la tubulure 8a étant obturée. Afin d'éviter tout collage intempestif de l'armature 4, le dimensionnement des pièces est calculé de manière qu'il subsiste dans cette première position extrême un entrefer 15 non nul entre l'armature 4 et le flasque de gauche 2a. Dans cette position, le ressort 12, moins fort que le ressort 10, se trouve comprimé par ce dernier entre les brides 11a et 11b.

Lorsqu'on soumet la bobine 3 à une demi-excitation, elle fait se déplacer l'armature 4 vers la droite dans une position intermédiaire déquilibre à l'encontre de la force du ressort 10 légèrement comprimé. Dans cette position (fig. 3) la bride 11a est butée sur la bague de guidage 4a tandis que la bride 11b reste dégagée de la bague de guidage 4b. Le ressort 12 se met en extension et applique les billes 6a, 6b sur leurs sièges 7a, 7b, tandis que la bille 14 quitte la bride 11b. Les deux tubulures 8a et 8b sont alors obturées.

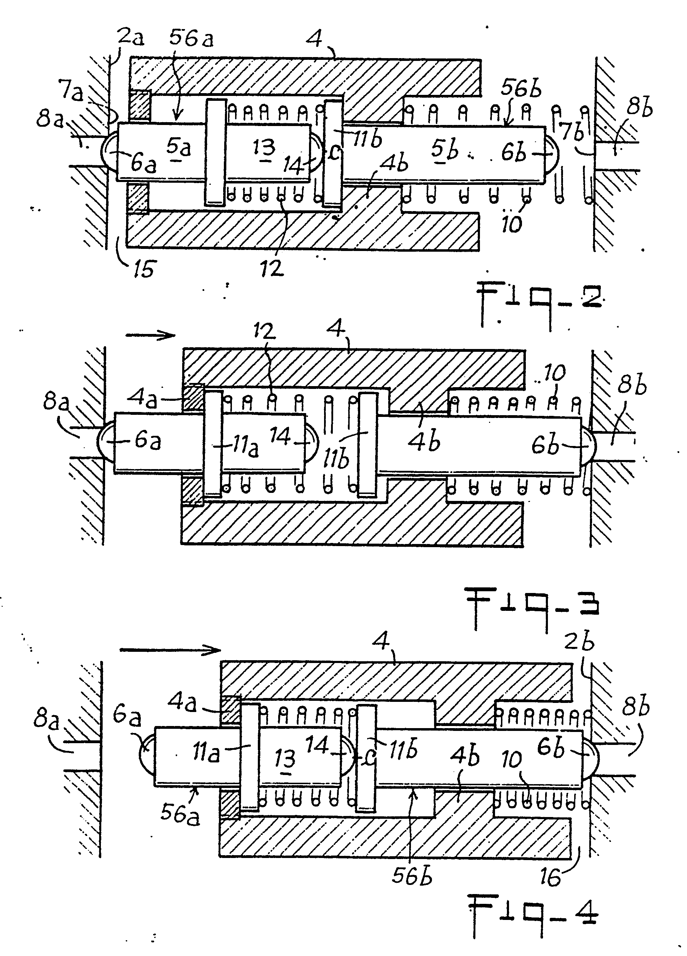

Si l'on applique à la bobine 3 sa pleine excitation, elle déplace l'armature 4 vers la droite, avec compression du ressort 12, jusque dans sa seconde position extrême (fig. 4) définie par la venue en butée de la bague de guidage 4a sur la bride 11a du clapet 56a, et de la bille 14 appartenant à l'entretoise 13 sur la bride 11b du clapet 56b la bille 6b de ce dernier venant obturer la tubulure 8b, tandis que la tubulure 8a est mise en communication avec la tubulure 9. Les éléments sont dimensionnés pour qu'ici aussi demeure un entrefer 16 non nul, entre l'armature 4 et le flasque de droite 2b.

On constate que, pour venir dans leur position respective d'obturation, les clapets 56a, 56b sont poussés, du fait du déplacement de l'armature 4, par l'intermédiaire non pas de leur bride respective 11a, 11b, mais de la bille 14 en contact ponctuel avec la bride 11b de la pièce 5b (figure 2 et 4), ce qui assure un alignement automatique des clapets 56a, 56b sur l'axe 1 et donc de leurs billes 6a, 6b sur les sièges 7a, 7b de celles-ci. Cela assure à l'électrovalve un fonctionnement parfait et sans fuite en toutes circonstances.

De plus, la structure correspondante de l'équipage mobile formé par l'armature 4 et les clapets 56a, 56b procure un assemblage très simple et aisé de celui-ci. Il suffit d'introduire le clapet 56b dans la bague de guidage 4b, qui fait corps avec l'armature 4, puis le clapet 56a après interposition du ressort 12, et enfin de visser dans l'armature 4 la bague de guidage 4a grâce à un filetage 17 prévu à cet effet.

Une électrovalve telle que décrite trouve application par exemple dans les systèmes de freinage antipatinants pour véhicules automobiles. La tubulure 9 étant raccordée à un cylindre de frein, la tubulure 8b à la source de fluide sous pression et la tubulure 8a à la bâche du système ou à l'atmosphère, la première position de l'électrovalve correspond à une phase de freinage, la seconde position à une phase de relâchement du freinage et la position intermédiaire à une phase de maintien de la force de freinage existante.

## Revendications

1 - Electrovalve à troies voies et trois positions, présentant une structure générale à axe de symétrie (1) et comportant une armature magnétique (4) mobile en translation suivant cet axe sous l'action de moyens électromagnétiques (3) et d'un ressort de rappel (10), cette armature étant creuse et comportant intérieurement deux clapets (56a et 56b) situés sur ledit axe, mobiles l'un par rapport à l'autre et par rapport à l'armature, écartés l'un de l'autre par un ressort (12) et munis de brides (11a, 11b) par l'intermédiaire desquelles ils peuvent être déplacés par l'armature mobile vis-à-vis de sièges respectifs fixes (7a, 7b) qu'ils sont susceptibles d'obturer, caractérisée en ce que chaque position extrême de l'armature (4), pour laquelle un premier des clapets est plaqué sur son siège et le second clapet est dégagé de son siège, est déterminée par butée de l'armature contre la bride du second clapet lui-même en butée contre le premier clapet via une entretoise (13) disposée centralement entre les clapets et coopérant en appui sur l'extrémité interne d'un des clapets suivant un contact ponctuel en un point (C) situé sensiblement sur l'axe de symétrie de l'électrovalve.

2 - Electrovalve selon la revendication 1, caractérisée en ce que l'entretoise (13) est constituée par une pièce indépendante librement interposée entre les clapets (56a, 56b).

3 - Electrovalve selon la revendication 1, caractérisée en ce que l'entretoise (13), venant en appui ponctuel sur l'un des clapets (56b), est solidaire de l'autre clapet (56a).

4 - Electrovalve selon l'une quelconque des revendications 1 à 3, caractérisée en ce que le contact ponctuel est réalisé entre une surface plane perpendiculaire à l'axe de symétrie (1) et une surface bombée appartenant respectivement l'une audit clapet (56b) et l'autre à l'entretoise (13).

5 - Electrovalve selon la revendication 4, caractérisée en ce que la surface bombée de contact appartient à l'entretoise (13) et la surface plane au clapet (56b).

6 - Electrovalve selon la revendication 4 ou la revendication 5, caractérisée en ce que la surface bombée est formée par une bille sphérique (14).

7 - Electrovalve selon la revendication 6, dans laquelle les organes d'obturation du clapet sont constitués par des billes, caractérisée en ce que ces billes (6a, 6b) et la bille (14) de contact ponctuel, alignées sur l'axe de symétrie (1), sont identiques.

8 - Electrovalve selon l'une quelconque des revendications 1 à 7, caractérisée en ce que chaque clapet (56a, 56b) comporte une partie cylindrique (5a, 5b) montée à coulissement dans une bague de guidage respective (4a, 4b) de l'armature (4).

9 - Electrovalve selon la revendication 8, caractérisé en ce que les clapets (56a, 56b) sont retenus dans l'armature mobile (4) par simple interposition de l'ensemble de leurs brides (11a, 11b) entre les bagues (4a, 4b) de guidage des clapets, seule l'une (4a) de ces bagues étant fixée de manière démontable et réglable dans l'armature mobile (4).

**Patentansprüche**

1. Elektromagnetisches Dreiwegeventil mit drei Stellungen, mit einer Grundstruktur, die eine Symmetrieachse (1) aufweist, mit einem magnetischen Anker (4), der unter Einwirkung elektromagnetischer Mittel (3) und einer Rückstellfeder (10) längs der Symmetrieachse verschiebbar ist, wobei dieser Anker hohl ist und in seinem Inneren zwei Ventile (56a, 56b) aufweist, die auf der Symmetrieachse liegen und sowohl gegeneinander als auch bezüglich des Ankers beweglich sind, die durch eine Feder (12) voneinander weg vorgespannt sind und die Bunde (11a, 11b) tragen, über welche sie von dem beweglichen Anker bezüglich zugeordneter feststehender Ventilsitze (7a, 7b) verlagerbar sind, welche jeweils durch die Ventile verschließbar sind, dadurch gekennzeichnet, daß jede der Endlagen des Ankers (4), in welchen eines der Ventile gegen den zugeordneten Ventilsitz angelegt ist, während das andere Ventil von seinem Ventilsitz abgehoben ist, durch Anschlagen des Ankers gegen den Bund des zweiten Ventils vorgegeben ist, welches seinerseits über einen Distanzkörper (13) am ersten Ventil anschlägt, wobei dieser Distanzkörper zentral zwischen den Ventilen angeordnet ist und über einen Punktkontakt am innen liegenden Ende des einen der Ventile angreift, wobei dieser Angriffspunkt (C) im wesentlichen auf der Symmetrieachse des Magnetventils liegt.

2. Dreiwegeventil nach Anspruch 1, dadurch gekennzeichnet, daß der Distanzkörper (13) durch ein unabhängiges Bauteil gebildet ist, welches frei zwischen den beiden Ventilen (56a, 56b) angeordnet ist.

3. Dreiwegeventil nach Anspruch 1, dadurch gekennzeichnet, daß der Distanzkörper (13), der punktförmig an dem einen der Ventile (56b) angreift, fest mit dem anderen Ventil (56a) verbunden ist.

4. Dreiwegeventil nach einem der Ansprüche 1 bis 3, dadurch gekennzeichnet, daß der Punktkontakt zwischen einer ebenen Oberfläche, die senkrecht auf der Synmetrieachse (1) steht, und einer gewölbten Oberfläche gebildet wird, wobei die vorgenannten beiden Oberflächen auf dem einen Ventilkörper (56b) bzw. auf dem Distanzkörper (13) vorgesehen sind.

5. Dreiwegeventil nach Anspruch 4, dadurch gekennzeichnet, daß die gewölbte Kontaktoberfläche auf dem Distanzkörper (13) vorgesehen ist und die ebene Oberfläche auf dem Ventil (56b) liegt.

6. Dreistellungsventil nach Anspruch 4 oder 5, dadurch gekennzeichnet, daß die gewölbte Oberfläche durch eine sphärische Kugel (14) gebildet ist.

7. Dreiwegeventil nach Anspruch 6, bei welchem die Schließmittel der Ventile durch Kugeln gebildet sind, dadurch gekennzeichnet, daß die Ventilkugeln (6a, 6b) und die den Punktkontakt bildende Kugel (14) auf die Symmetrieachse (1) ausgefluchtet sind und identisch sind.

8. Dreiwegeventil nach einem der Ansprüche 1 bis 7, dadurch gekennzeichnet, daß jedes der Ventile (56a, 56b) einen zylindrischen Abschnitt (5a, 5b) aufweist, der verschiebbar in einem zugeordneten Führungsring (4a, 4b) des Ankers (4) angeordnet ist.

9. Dreiwegeventil nach Anspruch 8, dadurch gekennzeichnet, daß die Ventile (56a, 56b) einfach dadurch in dem beweglichen Anker (4) gehalten sind, daß die durch ihre Bunde (11a, 11b) gebildete Anordnung zwischen den Führungsringen (4a, 4b) der Ventile angeordnet ist, wobei nur ein einziger (4a) der Führungsringe entfernbar und einstellbar in dem beweglichen Anker (4) angeordnet ist.

**Claims**

1. Three-way electro-magnetic valve having three operating positions and having an overall structure being symmetric with respect to an axis of symmetry (1), comprising a magnetic armature (4) adapted for translational movement along the axis of symmetry responsive to electro-magnetic means (3) and return spring means (10), the armature being hollow and receiving two valves (56a, 56b) arranged on said symmetry axis and being apt for relative movement with respect to one another and with respect to the armature, the valves being biassed by biassing spring means (12) in the sense of increasing their relative distance and having collars (11a, 11b) through which the movable armature acts on the valves so as to displace them with respect to associated fixed valve seats (7a, 7b) adapted to be closed by the valves, characterized in that each end position of the armature (4) wherein a first of the valves is forced against its seat, while the second valve is lifted from its seat, is defined by the armature abutting against the second collar of the second valve, which in turn abuts against the first valve via a distance member (13) centrally arranged between the valve sand cooperating with the interior end of one of the valves in a point contact, the contact point (C) being essentially situated on the axis of symmetry of the electro-magnetic valve.

2. Electro-magnetic valve according to claim 1, characterized in that the distance member (13) is formed by an independent member arranged between the valves (56a, 56b) for free movement.

3. Electro-magnetic valve according to claim 1, characterized in that the distance member (13) attacking the one of the valves (56b) in a point contact manner is fixedly connected to the other valve (56a).

4. Electro-magnetic valve according to one of claims 1 to 3, characterized in that the point contact is obtained by cooperation between plane surface being perpendicular to the axis of symmetry (1) and a convex surface, said surfaces being formed on said one valve (56b) and the distance member (13), respectively.

5. Electro-magnetic valve according to claim 4, characterized in that the convex contact surface is formed on the distance member (13) and the plane surface is formed on the valve (56b).

6. Electro-magnetic valve according to claims 4 or 5, characterized in that the convex surface is formed by a spherical ball (14).

7. Electro-magnetic valve according to claim 6, wherein the closing members of the valves are formed by balls, characterized in that the closing balls (6a, 6b) and the contact ball (14) being part of the point contact are aligned on the axis of symmetry (1) and are identical.

8. Electro-magnetic valve according to one of claims 1 to 7, characterized in that each valve (56a, 56b) comprises a cylindrical portion (5a, 5b) arranged for sliding movement in an associated guide ring (4a, 4b) of the armature (4).

9. Electro-magnetic valve according to claim 8, characterized in that the valves (56a, 56b) are retained within the movable armature (4) by mere arrangement of their collars (11a, 11b) between the guide rings (4a, 4b) of the valves, only one (4a) of the guide rings being removably fixed to the movable armature and being adjustable therein.

Fig. 1

Fig-2

Fig-3

Fig-4